# DEMANDE DE BREVET EUROPEEN

(11) **EP 1 545 091 A1**
(43) Date de publication de la demande: **22.06.2005**
(21) Numéro de dépôt: 04292962.0
(22) Date de dépôt: 13.12.2004
(51) Int. Cl.: H04L 29/06

(54) **Système de communication entre un terminal mobile et un serveur de communication et les procédés de communication associés**

(30) Priorité: 16.12.2003 FR 0314767
(71) Demandeur: Melissima Start, 45100 Orleans (FR)
(72) Inventeur: René, François, 75018 Paris (FR); Sevenier, Laurent, 45620 Isdes (FR); Leforestier, Marc, 45130 Baule (FR)
(74) Mandataire: Debay, Yves

(57) **Abrégé**

La présente invention concerne un système de communication comprenant au moins un module client (1) intégré dans un terminal mobile pour diffuser une information codée, un module serveur (2) intégré à un serveur de communication pour récupérer l'information provenant d'au moins un réseau extérieur existant (7a, 7b, 7c) et un réseau de communication (4, 5) pour transférer l'information codée entre le module client (1) et module serveur (2), la transmission de l'information s'effectue par l'envoi d'un message chaîné comprenant plusieurs segments, au moins un des segments correspondant à une commande codée sur plusieurs caractères, le message pouvant également comprendre des segments correspondant à des variables nécessaires à l'exécution de la commande et des variables récurrentes étant placées en tête du chaînage et pouvant être un numéro d'authentification du terminal mobile, les segments étant terminés par un caractère distinctif indiquant la fin du segment dans le chaînage.

## Description

La présente invention concerne un système de communication entre un terminal mobile et un serveur de communication. Le domaine technique de l'invention se rapporte à la communication réseau par envoi de message en image, son et texte entre au moins deux moyens de communication. La présente invention concerne plus particulièrement un procédé rapide et sécurisé de transmission d'informations entre un terminal mobile et un serveur de communication.

Il est connu dans l'art antérieur des systèmes de communication sans fil permettant de transférer des informations entre des téléphones portables (SMS, messagerie) ou entre un téléphone portable et un serveur de communication (WAP) à travers des réseaux de communication, tels que des réseaux classiques appartenant à des opérateurs téléphoniques ou à des fournisseurs d'accès Internet ou des réseaux à ondes courtes tels que le réseau WI-FI. Un des inconvénients de ces communications est le temps important de transfert des informations entre par exemple un téléphone portable et un serveur de communication. Un autre inconvénient est le manque de sécurité lors du transfert des informations à travers les différents réseaux.

Il est par ailleurs connu par le WO 01/86515 un procédé de transaction et un système de vente permettant de sécuriser le transfert d'informations. Le système de vente prévoit des terminaux ou bornes de service pour fournir sur place des produits et services payants sélectionnables par les clients. Une interface de périphérique sans contact prévue sur ces bornes de service permet de transférer à des terminaux mobiles spécifiques un programme de sélection des produits/services disponibles. L'utilisateur se sert du terminal mobile spécifique pour envoyer des messages de données à travers un réseau de télécommunication vers une centrale de services. Cette centrale réceptionne les messages et identifie l'objet du produit/service souhaité ainsi que la borne de service. Le paiement s'effectue de manière sécurisée en utilisant le réseau de radiocommunication classique. L'inconvénient de ce type de procédé est qu'il ne permet pas d'échanger directement des informations entre le téléphone portable et la borne de communication.

Il est également connu par le document WO 01/65480 un procédé de commande de carte à puce à travers un réseau de télécommunication. Toutefois, ce type de procédé est inadapté pour établir des échanges d'information rapides et sécurisés entre utilisateurs via leur terminal mobile respectif.

La présente invention a pour objectif de pallier certains inconvénients de l'art antérieur en proposant un système de communication, proposant des procédés de communication rapides et sécurisés de l'information transitant entre un terminal mobile et un serveur de communication à travers différents réseaux de communication.

Un premier but est atteint par un système de communication permettant le transfert via un réseau de communication d'au moins une information codée entre un terminal mobile et un serveur de communication, ledit système comprenant au moins un module client intégré dans le terminal mobile permettant de diffuser l'information codée à un utilisateur dudit terminal mobile, un module serveur intégré dans le serveur de communication permettant de récupérer une information non codée provenant d'au moins un réseau extérieur existant, et au moins un réseau de communication distinct dudit réseau extérieur permettant le transfert de l'information codée entre le module client du terminal mobile et le module serveur du serveur de communication, ledit système de communication étant caractérisé en ce qu'il comporte :
- des moyens de codage respectifs prévus dans ledit module client et dans le module serveur, pour coder une information provenant d'un réseau extérieur ;
- des moyens d'émission et de réception respectifs prévus dans le terminal mobile et dans le module serveur, agencés pour effectuer la transmission de l'information codée sous la forme d'un message chaîné comprenant un ou plusieurs segments, au moins un des segments correspondant à une commande codée sur plusieurs caractères, le message pouvant également comprendre des segments correspondant à des variables nécessaires à l'exécution de la commande et des variables récurrentes placées en tête du segment et pouvant être un numéro d'authentification du terminal mobile, les segments étant terminés par un caractère distinctif indiquant la fin du segment dans le chaînage ;
lesdits moyens d'émission et de réception du terminal mobile étant en outre agencés pour permettre une communication entre deux terminaux mobiles incluant l'émission depuis le module client d'un premier terminal mobile d'une information codée à destination du module client d'un second terminal mobile.

Selon une autre particularité, la transmission d'un message chaîné peut s'effectuer via deux réseaux distincts, soit un réseau de communication à ondes courtes, tel que le réseau WI-FI, quand le terminal mobile et le serveur de communication sont situés dans une même zone de communication à ondes courtes, soit, dans le cas contraire, un réseau classique tel que le réseau radio-téléphonique mobile.

Selon une autre particularité, le module client intégré dans le terminal mobile comprend un moyen de détection automatique permettant de savoir si le terminal mobile se trouve dans un réseau de communication à ondes courtes.

Selon une autre particularité, le système de communication, comprend un module passerelle intégré dans un terminal appartenant par exemple à un opérateur d'un réseau classique, ledit module passerelle permettant le transfert de l'information codée entre le module serveur du serveur de communication et le module client du terminal mobile via le réseau classique.

Selon une autre particularité, le module client, le module serveur et le module passerelle comprennent un moteur interne capable soit de transformer les commandes codées reçues par l'un ou l'autre des modules en action, soit de créer un message chaîné codé en langage propriétaire à envoyer vers un autre module du système de communication, ledit moteur interne comprenant un moteur principal maître permettant d'assurer le trafic des informations à traiter et un ou plusieurs moteurs secondaires esclaves permettant d'exécuter les actions à réaliser, lesdits modules comprenant également une bibliothèque interne aux modules comportant un ensemble de processus permettant l'exécution des actions liées aux commandes demandées.

Selon une autre particularité, le moteur principal du moteur interne comprend un moyen de réception d'une information, un moyen de décodage d'une information, un moyen de traitement du message, un moyen de codage d'une information et un moyen d'émission d'une information, le moyen de décodage comprenant un moyen de détection d'une subdivision de segments dans un chaînage et un moyen d'éclatement du chaînage en segments, le moyen de codage comprenant un moyen de création d'un message chaîné.

Selon une autre particularité, les actions exécutées par les moteurs secondaires du moteur interne peuvent être l'affichage d'une image ou l'émission d'un son.

Selon une autre particularité, le codage des commandes s'effectue à l'aide d'un langage propriétaire de fonctionnalités, une commande pouvant être composée de quatre caractères, chaque commande étant unique et ne pouvant se combiner avec une autre commande.

Selon une autre particularité, le moteur interne du module client, du module serveur et du module passerelle s'exécute sur un système d'exploitation de base architecturale UNIX™ tel que le Symbian®.

Un autre but est atteint par un procédé de transmission d'information réalisé par le moteur interne des modules du système de communication, caractérisé en ce que lors de la réception d'un message chaîné par un des modules, le procédé comprend les étapes suivantes :
- une étape de réception d'une information sous forme d'un message chaîné, par le moyen de réception du moteur principal,
- une étape de détection des segments compris dans le message chaîné et d'éclatement de ce message chaîné en plusieurs segments, ladite étape étant réalisée par le moyen de décodage du moteur principal,
- une étape de repérage du segment correspondant aux commandes à exécuter par le moyen de décodage du moteur principal,
- une étape de récupération d'un processus correspondant à une commande par le moyen de traitement, ledit processus étant disposé dans la bibliothèque interne des modules,
- une étape de lancement par le processus requis d'actions auprès du ou des moteurs secondaires,
et en ce que lors de l'envoi d'un message chaîné le procédé comprend les étapes suivantes :
- une étape de réception de l'information stockée dans un moyen de mémorisation ou émise par un utilisateur via un moyen d'émission,
- une étape de codage de la commande correspondant à l'exécution de ladite information par le moyen de codage du moteur principal,
- une étape de création d'un message chaîné comprenant au moins la commande codée et l'information à envoyer, par le moyen de codage du moteur principal,
- une étape d'envoi du message chaîné vers un autre module du système de communication par le moyen d'émission du moteur principal.

Selon une autre particularité, à un envoi d'une action par le moteur principal vers au moins un moteur secondaire, le moteur principal attend une réponse du moteur secondaire, avant d'envoyer une autre action.

Un autre but est atteint par un procédé de communication entre le terminal mobile et le serveur de communication selon le système de communication, caractérisé en ce que la transmission d'une information du serveur de communication vers le terminal mobile comprend les étapes suivantes :
- une étape de réception et de codage par le module serveur du serveur de communication, d'une information provenant d'un réseau extérieur,
- une étape de vérification de la présence du terminal mobile sur le réseau du système de communication,
- une étape de transmission de l'information codée via le réseau du système de communication vers le module client d'un terminal mobile,
- une étape de réception et de décodage de l'information par le module client du terminal mobile,
- une étape de diffusion de l'information par le module client du terminal mobile,
et en ce que la transmission d'une information du terminal mobile vers le serveur de communication comprend les étapes suivantes :
- une étape de codage par le module client du terminal mobile d'une information émise par un utilisateur, via un moyen d'émission appartenant audit terminal mobile, à destination du module client d'un second terminal mobile ou à destination du module serveur du serveur de communication,
- une étape de transmission de l'information codée via le réseau du système de communication vers le module serveur du serveur de communication ou vers le module client du second terminal mobile,
- une étape de réception et de stockage, dans un moyen de mémorisation du serveur de communication, de l'information codée ou de décodage et de diffusion de l'information par le module client du second terminal mobile.

Selon une autre particularité, l'étape de vérification de la présence du terminal mobile sur le réseau de communication à ondes courtes, comprend une étape d'envoi d'un message codé par le module client du terminal mobile vers le module serveur du serveur de communication indiquant au module serveur la présence du terminal mobile sur le réseau de communication à onde courte, si le module serveur ne répond pas avant la fin d'une étape d'attente suivant l'écoulement d'un temps prédéfini, le module client réitère l'étape d'envoi du message codé.

Selon une autre particularité, l'étape de transmission d'une information codée du module client d'un premier terminal mobile émetteur de ladite information vers le module client d'un second terminal mobile destinataire de ladite information via un réseau de communication à ondes courtes comprend les sous étapes suivantes :
- envoi par le module client du premier terminal mobile vers le module serveur du serveur de communication d'un premier message codé demandant au module serveur si le second terminal mobile destinataire de l'information codée est présent sur le réseau de communication à ondes courtes,
- réception et décodage par le module serveur du premier message codé et envoi d'un second message codé par le module serveur vers le module client du premier terminal mobile, lui indiquant une réponse,
- envoi de l'information codée par le module client du premier terminal directement vers le module client du second terminal mobile, si ledit second terminal mobile est présent sur le réseau de communication à ondes courtes,
- envoi de l'information codée par le module client du premier terminal vers le module serveur du serveur de communication et stockage de l'information codée par ledit module serveur, si le second terminal mobile n'est pas présent sur le réseau de communication à ondes courtes.

Ainsi, l'invention permet de créer un sous-réseau autonome de communication entre les différents terminaux mobiles via les ondes courtes, tout en permettant un protocole de communication sécurisé.

Selon une autre particularité, l'étape de transmission, d'une information codée entre le module serveur du serveur de communication et le module client du terminal mobile à travers un réseau de communication classique, s'effectue via le module passerelle intégré et comprend les sous-étapes suivantes :
- envoi par le module serveur vers le module passerelle d'un premier message codé demandant la création d'une liaison vers le module client,
- réception et décodage du premier message codé par le module passerelle, envoi d'un second message par le module passerelle vers le terminal, par exemple de l'opérateur du réseau de communication classique, pour créer la liaison entre le module passerelle et le module client et attente par le module passerelle de la présence du terminal mobile sur le réseau de communication classique,
- envoi par le module client vers le module passerelle d'un troisième message codé indiquant la présence du terminal mobile sur le réseau de communication classique, réception par le module passerelle du troisième message codé,
- envoi par le module passerelle au module serveur du troisième message codé indiquant la présence du terminal mobile sur le réseau de communication classique, réception et décodage par le module serveur du quatrième message codé,
- envoi par le module serveur au module passerelle de l'information codée stockée dans le moyen de mémorisation du serveur de communication,
- réception et envoi par le module passerelle vers le module client via le réseau de communication classique de l'information codée.

D'autres particularités et avantages de la présente invention apparaîtront plus clairement à la lecture de la description ci-après, faite en référence aux dessins annexés, dans lesquels :
- la figure 1 montre un schéma représentatif de l'architecture réseau du système de communication selon un mode de réalisation de la présente invention;
- la figure 2A montre un schéma représentatif d'une information chaînée provenant par exemple d'un module client d'un terminal mobile vers un module serveur d'un serveur de communication, selon un mode de réalisation de la présente invention ;
- la figure 2B montre un schéma représentatif d'une information chaînée provenant, par exemple, d'un module serveur d'un serveur de communication vers un module client d'un terminal mobile selon un mode de réalisation de la présente invention ;
- la figure 3A montre un schéma représentatif d'un moteur interne situé dans chacun des modules appartenant au système de communication selon un mode de réalisation de la présente invention;
- la figure 3B montre le schéma fonctionnel représentatif du procédé de fonctionnement du moteur interne d'un des modules du système de communication lors de la réception d'une information chaînée, selon un mode de réalisation de la présente invention ;
- la figure 3C montre le schéma fonctionnel représentatif du procédé de fonctionnement du moteur interne de chacun des modules du système de communication lors de l'émission d'une information chaînée, selon un mode de réalisation de la présente invention ;
- la figure 4A montre le schéma fonctionnel représentatif du procédé de transmission d'information partant d'un serveur de communication vers un terminal mobile via un réseau classique de type réseau radio-téléphonique mobile, selon un mode de réalisation de la présente invention ;
- la figure 4B montre le schéma fonctionnel représentatif du procédé de transmission d'informations partant d'un terminal mobile vers un serveur de communication via un réseau classique de type réseau radio-téléphonique mobile, selon un mode de réalisation de la présente invention ;
- la figure 5A montre le schéma fonctionnel représentatif du procédé de transmission d'information partant d'un serveur de communication vers un terminal mobile via un réseau à ondes courtes de type réseau WIFI, selon un mode de réalisation de la présente invention ;
- la figure 58 montre le schéma fonctionnel représentatif du procédé de transmission d'information partant d'un terminal mobile vers un serveur de communication via un réseau à ondes courtes de type réseau WIFI, lors d'une transmission d'informations entre deux terminaux mobiles par exemple, selon un mode de réalisation de la présente invention ;

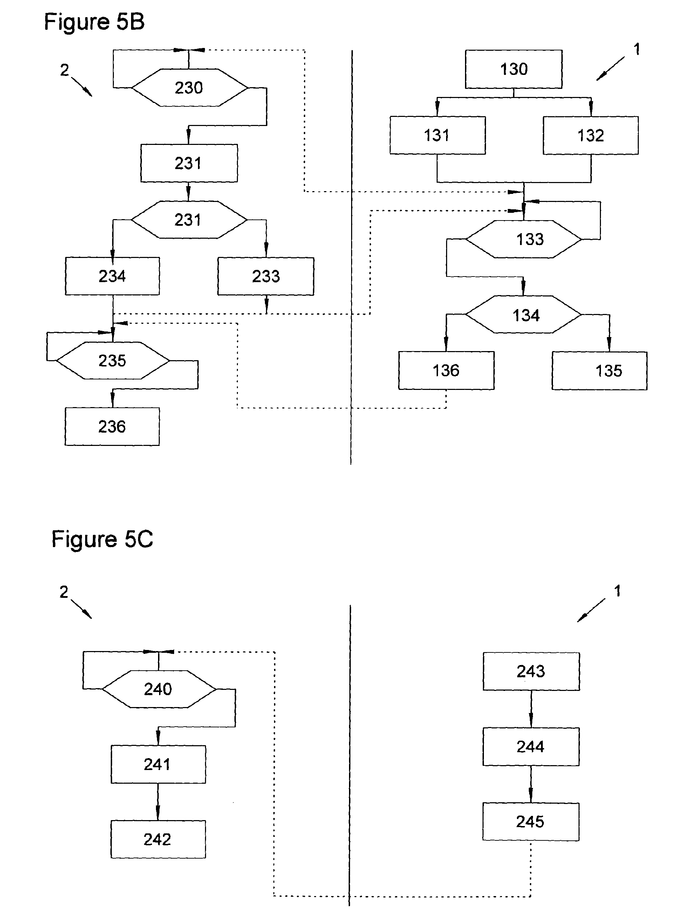

- la figure 5C montre le schéma fonctionnel représentatif du procédé de transmission d'information partant d'un terminal mobile vers un serveur de communication via un réseau à ondes courtes de type réseau WIFI, lors d'une transaction, telle qu'un achat à distance ou un vote à distance par l'utilisateur du terminal mobile par exemple, selon un mode de réalisation de la présente invention ;
- la figure 6 représente schématiquement le processus de communication permettant un transfert de l'information entre terminaux par ondes-courtes.

Le système de communication de la présente invention permet une transmission directe ou non d'informations, par exemple par e-mail ou messagerie instantanée, entre deux terminaux mobiles de communication. Il permet également d'effectuer des transactions, telles que des envois d'offres commerciales d'un constructeur ou d'un opérateur téléphonique vers un terminal mobile, des achats à distance ou des votes électroniques à distance d'un terminal mobile vers un serveur de communication.

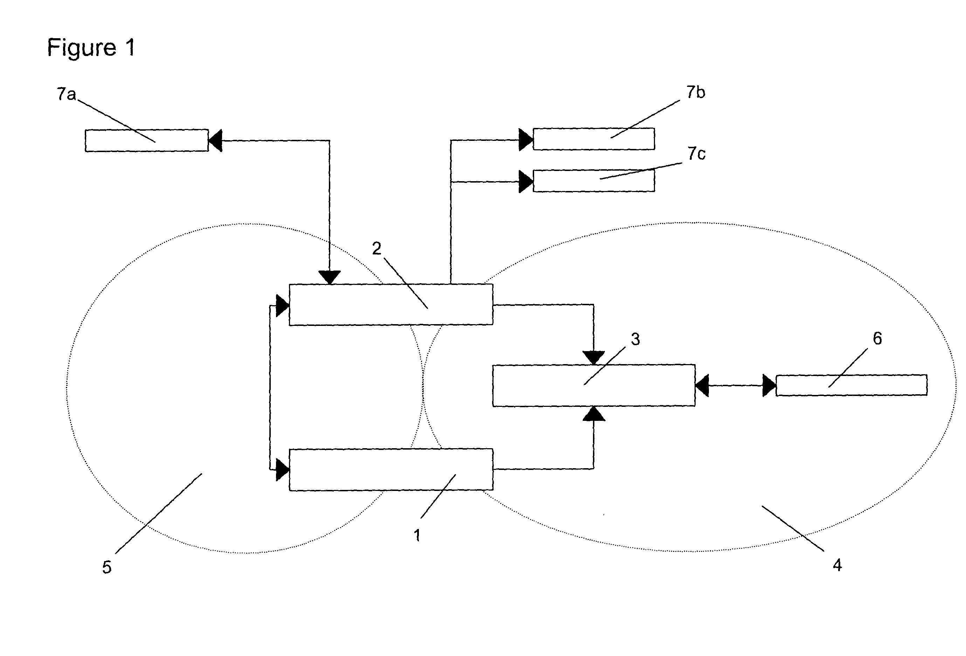

La figure 1 montre un schéma représentatif de l'architecture générale du système de communication selon un mode de réalisation de la présente invention. Le système de communication de la présente invention comprend trois modules (1, 2, 3) permettant le transfert d'informations entre des terminaux mobiles, par exemple un téléphone portable ou un assistant personnel de type PDA et des serveurs de communication traditionnels, c'est-à-dire des dispositifs stockant et distribuant des données. La transmission d'informations effectuée au sein du système de communication peut être réalisée à travers deux réseaux distincts (4, 5). Un premier réseau (4) est de communication classique à distance ou grandes ondes, par exemple un réseau radio-téléphonique mobile, dans lequel les informations transitent à travers le réseau d'un opérateur de téléphonie (6) mobile ou d'un fournisseur d'accès Internet. Un second réseau (5) est de communication à ondes courtes de type WIFI et/ou bluetooth. Parmi les trois modules (1, 2, 3) du système de communication présenté auparavant, un premier module appelé module client (1) est intégré dans la puce d'un terminal mobile et/ou sur tout support de stockage interne au terminal. Ce module client (1) est l'élément de diffusion des informations du système de communication de la présente invention à un utilisateur du terminal mobile sous forme d'images fixes ou animées, de son ou de texte. Dans le module client (1) transitent les informations suivant plusieurs moyens de communication, tels que la messagerie instantanée par texte, l'envoi et la réception de message électronique. Le module client (1) comprend un moyen de détection automatique permettant de repérer si le terminal mobile se trouve sur un réseau à ondes courtes de type WIFI. Un deuxième module dit module serveur (2) est intégré sur un serveur de communication. Ce module (2) est l'élément distributeur des informations du système de communication. Le serveur de communication est en relation avec d'autres réseaux existants (7a, 7b, 7c) extérieurs au réseau du système de la présente invention. Ces réseaux extérieurs (7a, 7b, 7c) peuvent utiliser des protocoles de communication tels que le protocole SMS (7b), le protocole Internet (7c) ou le protocole dédié, par exemple, à un système informatique d'une banque (7a). Le serveur réalise la gestion des flux de communication, et peut être, par exemple, relié au réseau d'une banque (7a) ou au réseau Internet d'un commerçant (non représenté). Le module serveur (2) permet de coder des informations provenant d'un ou plusieurs réseaux extérieurs en un langage propriétaire pour ensuite transférer lesdites informations codées à travers le système de communication de la présente invention. Le langage propriétaire sera présenté dans la suite de la description. Le troisième module du système de communication est le module passerelle (3). Ce module (3) est utilisé lors d'une communication via un réseau classique (4), tel qu'un réseau radio-téléphonique mobile d'un opérateur. Le module passerelle (3) est intégré sur les terminaux des opérateurs téléphoniques (6) ou des fournisseurs d'accès Internet. Il permet de faire transiter les informations du système de communication de la présente invention vers un système de communication distant via le réseau d'un opérateur (6). Lorsqu'un opérateur téléphonique ou un constructeur a besoin d'envoyer des informations soit au module client (1) du terminal mobile, soit au module serveur (2) du serveur de communication, il utilise le module passerelle (3) implanté dans son terminal. Lors d'une communication sur ondes courtes (5) de type WIFI entre un terminal mobile et un réseau de communication, le module passerelle (3) n'a aucun rôle à jouer, la communication étant réalisée directement entre le module client (1) du terminal mobile et le module serveur (2) du serveur de communication. Dans le mode de réalisation préféré de la présente invention, c'est le réseau à ondes courtes (5) de type WIFI et/ou Bluetooth qui sera le plus souvent utilisé par le système de communication. Ce réseau (5) permet de faire transiter les informations plus rapidement avec une grande sécurité.

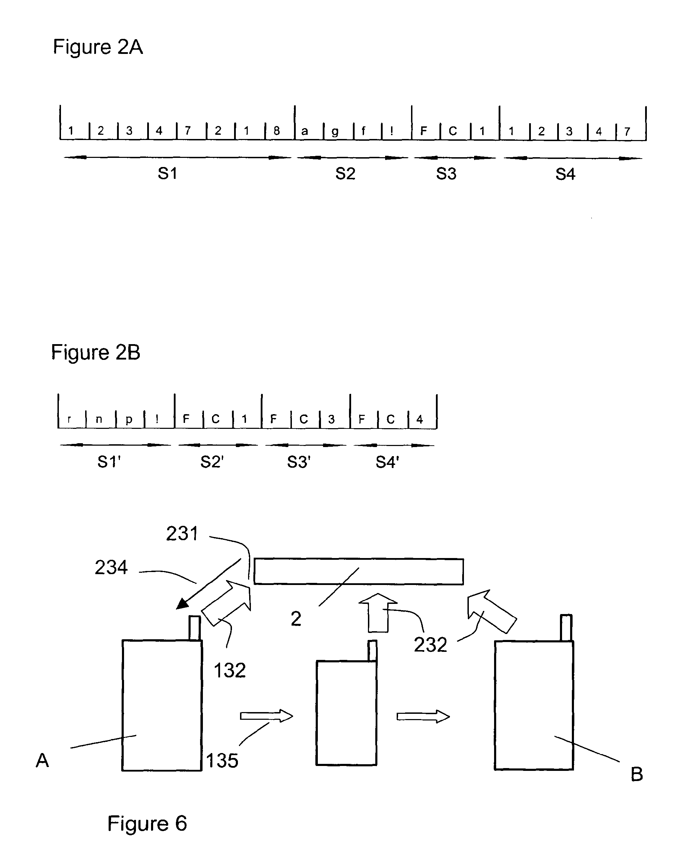

La transmission rapide et sécurisée d'informations entre les différents modules (1, 2, 3) du système de communication de la présente invention est réalisée à l'aide de messages chaînés, une partie dudit message étant codée en langage propriétaire. Les figures 2A et 2B représentent un message chaîné selon un mode de réalisation de la présente invention. Un message chaîné comprend plusieurs segments dont au moins un segment correspond à une commande codée (S2, S1'). Les autres segments du message peuvent comporter des données variables (S3, S4, S2', S3', S4') utiles à l'exécution de la commande codée et des données récurrentes (S1), par exemple d'identification, tels que le numéro IMSI (International Mobile Subscriber Identity) d'un téléphone mobile. La commande codée (S2, S1') est composée de 4 caractères. Ce codage est réalisé par un langage propriétaire nouveau, appelé dans la suite de la description langage Frene. Ce langage propriétaire est unique pour des raisons de vitesse et de compatibilité optimale. Le vocabulaire et la grammaire d'utilisation sont nouveaux. Un type de langage utilisé peut être, par exemple, pour une commande « envoi » composé des 3 caractères « r »-« n »-« p » suivis d'un symbole argument « ! ». Chaque commande du langage Frene est unique et ne peut être combinée avec une autre commande. Les différents segments sont repérables et facilement divisibles, grâce à un moyen de subdivision, par exemple un caractère spécifique situé en fin de segment. La position des différents segments varie selon la présence ou non de segments spécifiques et selon le module, du système de communication, émetteur de l'information. Ainsi, lorsque les segments comportant des données récurrentes (S1) sont présents dans le chaînage, ils sont placés en tête du message permettant ainsi d'accélérer le traitement des chaînages de caractères. Dans ce même souci de rapidité les éléments principaux ont eux aussi une hiérarchisation précise. Par exemple, le premier segment du chaînage (S1), envoyé du module client (1) du terminal mobile vers les autres modules de système de communication, peut comprendre le numéro IMSI appelant qui est le numéro constructeur du terminal mobile. De même, le premier segment (S1') du chaînage, envoyé du module serveur (2) vers le module client (1), peut comprendre la commande codée en Frene.

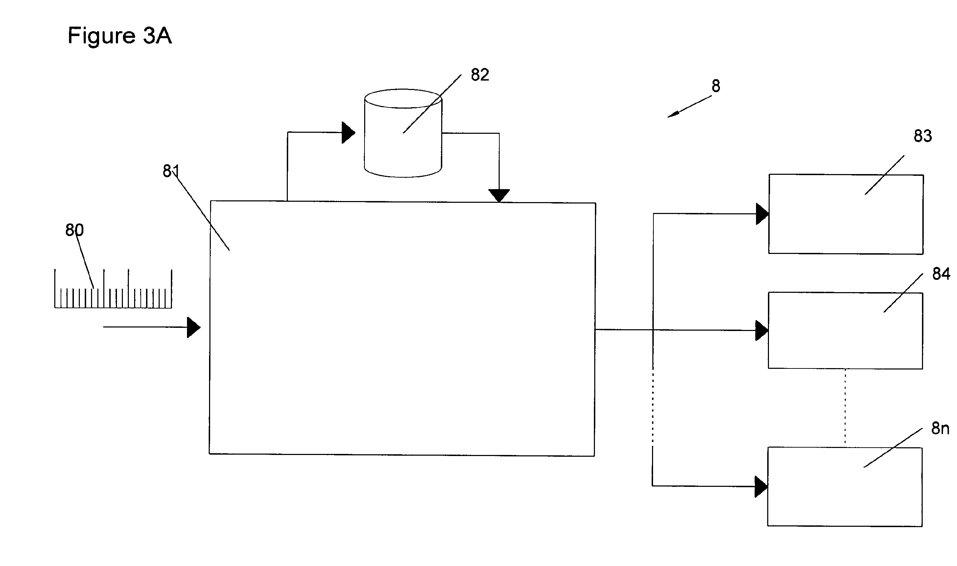

La figure 3A montre un schéma synoptique représentatif d'un moteur interne (8) fonctionnant dans chacun des trois modules (1, 2, 3). Le moteur interne (8) est capable de transformer en action les commandes codées transmises via un message chaîné (80) par un autre module. Le moteur interne (8) comprend un moteur principal maître (81) dont le rôle est d'assurer le trafic des informations à traiter et un ou plusieurs moteurs secondaires esclaves (83, 84, ..., 8n) dont le rôle est d'exécuter les actions relatives aux commandes envoyées. Une bibliothèque interne (82) au module stocke différents processus correspondant aux actions à exécuter. Le moteur principal comprend un moyen de réception d'un message chaîné ou non chaîné, un moyen de décodage dudit message chaîné, un moyen de traitement des différents segments présents dans une information chaînée, un moyen de codage d'une nouvelle information et un moyen d'émission d'une information. Le moyen de décodage comporte un moyen de détection de subdivisions des différents segments présents dans l'information chaînée, un moyen d'éclatement de chaînage en différents segments, et un moyen de repérage des différents segments, tels que le segment correspondant à la commande et ceux correspondant aux données. Le moyen de codage comporte un moyen de création d'un chaînage de segment formant une information chaînée.

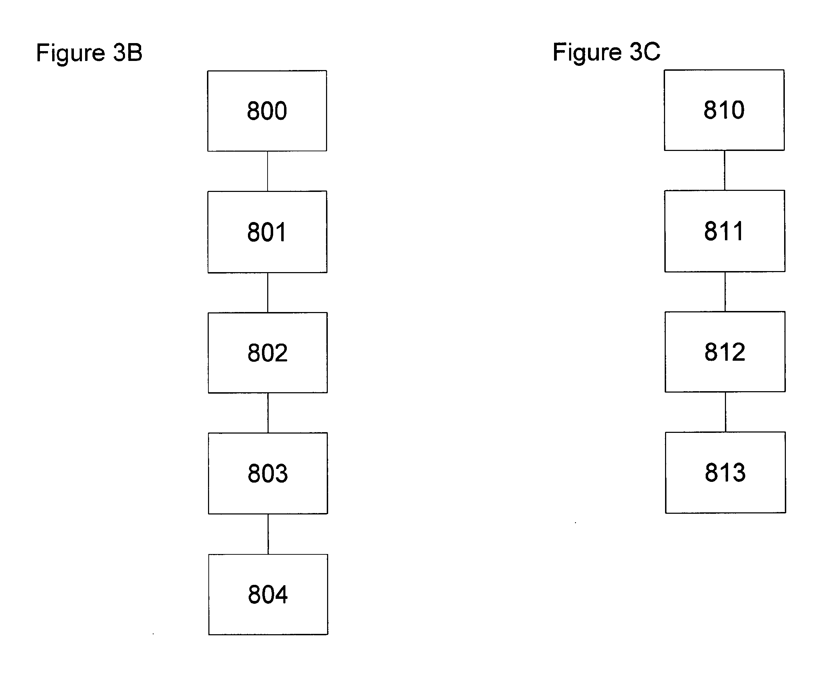

La figure 3B représente le schéma fonctionnel du moteur interne (8) lors de la réception d'une information codée (80). Cette information est transmise par un message chaîné comme décrit ci-avant comportant au moins une commande codée en langage Frene. A l'arrivée d'une information chaînée le moteur principal (81) réalise les étapes suivantes :
- une étape de réception (800) de l'information effectuée par un moyen de réception du moteur principal,
- une étape (801) de détection des subdivisions définissant la position des segments dans le chaînage et d'éclatement du chaînage, réalisée respectivement par les moyens de détection de subdivision et d'éclatement de chaînage du moyen de décodage,
- une étape de repérage des segments (802) identifiant un premier segment (S2, S1') comprenant les commandes codées, l'étape étant réalisée par le moyen de repérage des différents segments du moyen de décodage du moteur principal - chaque commande correspond à un processus précis permettant le lancement d'actions, l'ensemble des processus étant stocké dans la bibliothèque interne (82) du module-,
- une étape de recherche (803) du ou des processus définis par la ou les commandes dans la bibliothèque interne (82) réalisée par le moyen de décodage,
- une étape de lancement (805) des actions définies par les processus, ladite étape étant réalisée par le moyen de traitement de processus du moteur principal.

Le moyen de traitement des processus lance dans un ordre précis des actions vers les moteurs secondaires (83, 84, ...., 8n) qui vont les exécuter. Ces actions sont par exemple l'affichage d'une image par un moteur secondaire graphique (83), l'émission d'un son par un moteur secondaire de son (84). Les paramètres et données nécessaires (S1, S3, S4, S2', S3', S4') au bon fonctionnement de ces actions sont transmis également par le message chaîné comme expliqué précédemment. Le mode de transmission de données et d'actions entre le moteur principal (81) et un moteur secondaire (83) est réalisé par un système de question/réponse, c'est-à-dire, à un envoi d'une action, le moteur principal (81) attendra une réponse du moteur secondaire (83) avant d'envoyer une autre action au même moteur secondaire (83).

De même, la figure 3C représente le schéma fonctionnel du moteur interne (8) lors de l'émission d'une information codée vers un autre module du système de communication. Une information émanant d'un utilisateur via un moyen d'émission, par exemple un clavier d'un terminal, va être transmise au moteur principal (81) lors d'une première étape (810). Puis le moteur interne va réaliser les étapes suivantes :
- une étape de codage en langage Frene (811) de l'information, réalisée par le moyen de codage et de création d'un chaînage du moteur principal (81) - par exemple la réponse d'un vote dans le cas du module client (1) d'un terminal mobile,
- une étape d'élaboration du chaînage (812) des segments de l'information réalisée par le moyen de création de chaînage du moyen de codage, lesdits segments comportant la commande codée et l'information à transmettre,
- une étape d'émission de l'information chaînée (813) réalisée par le moyen d'émission du moteur principal (81) permettant d'envoyer le chaînage à un des deux autres modules du système de communication, par exemple le module serveur (2) du serveur de communication.

Chaque module est intégré de préférence sur un terminal possédant un système d'exploitation de base architecturale UNIX™. Par exemple, un des systèmes d'exploitations préféré de l'invention est le Symbian®. La norme de ce système d'exploitation est standardisée par la plupart des constructeurs en terminaux mobiles portables. Le Symbian® est capable de piloter les différents protocoles de communication tel que le Bluetooth et accepte comme langage de base le C++ et l'utilisation d'un module d'interfaçage graphique complémentaire contenant, par exemple, un moteur logiciel encapsulant un langage de traçage vectoriel, tel que le Plug-in Flash™ de Macromédia©® Inc. Ce type de système d'exploitation peut aussi bien être installé sur le processeur de la puce électronique et/ou un moyen de stockage interne du terminal mobile que sur le terminal d'un opérateur téléphonique ou d'un constructeur et également sur le terminal du serveur de communication. Ainsi, il permet donc de programmer directement les fonctions au travers d'un véritable système d'exploitation.

Dans la suite de la description, sont décrites les différentes transmissions d'informations entre les modules du système de communication et les réseaux.

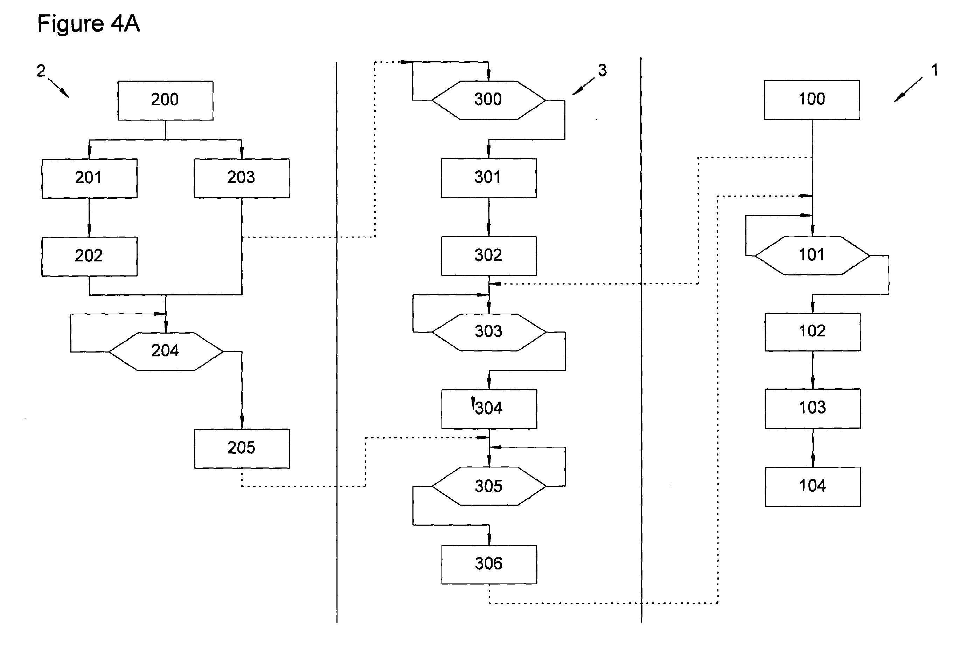

La figure 4A représente le schéma fonctionnel d'une communication dont l'information est envoyée par un serveur de communication vers un terminal mobile via un réseau de télécommunication classique, par exemple le réseau radio-téléphonique mobile. Les informations transmises entre le module serveur (2) et le module client (1) transitent par le module passerelle (3) intégré sur le terminal de l'opérateur téléphonique ou du fournisseur d'accès Internet avec lequel l'utilisateur du terminal mobile a un contrat de communication. Lorsqu'une ou des informations, telles que des données relatives à une offre commerciale ou un message provenant d'une messagerie instantanée, arrivent d'un réseau extérieur vers le module serveur (2), le moteur interne de ce dernier réalise les étapes suivantes :
- une étape de réception (200) desdites informations non codées, effectuée par le moyen de réception dudit moteur interne,
- une étape de codage (201) desdites informations en langage propriétaire Frene, effectuée par le moyen de codage dudit moteur interne,
- une étape de stockage (202) des informations codées dans un moyen de mémorisation intégré au serveur de communication,
- une étape de création d'un chaînage d'un premier message codé et d'envoi (203) dudit premier message codé vers le module passerelle (3), ladite étape étant réalisée en même temps que les deux étapes précédentes, et étant effectuée respectivement par le moyen de création de chaînage et le moyen d'émission dudit moteur interne, ledit premier message étant envoyé vers le module passerelle (3) lui demandant de contacter le module client (1) du terminal mobile destinataire des informations codées via le réseau de l'opérateur téléphonique (5), par exemple, et de créer une liaison avec ce module client (1).

Le moteur interne du module passerelle (3) est en état d'attente de réception d'un message (300), lorsque le premier message codé arrive. A réception dudit message, le moteur interne du module passerelle (3) réalise les étapes suivantes :
- une étape de réception et de décodage (301) du premier message codé envoyé par le module serveur (2), réalisée respectivement par le moyen de réception et le moyen de décodage,
- une étape (302) informant l'opérateur ou le constructeur concerné en lui demandant de créer une liaison avec le terminal mobile destinataire de l'information,
- une étape d'attente (303) de la présence du terminal mobile sur le réseau de l'opérateur.

Tant que le terminal mobile n'est pas présent sur le réseau, le module serveur (2) garde stockées dans son moyen de mémorisation les informations codées à transmettre. Dès que l'utilisateur du terminal mobile allume le terminal, le moteur interne du module client (1) réalise les étapes suivantes :
- une étape de création et d'envoi (100) à l'opérateur d'un deuxième message codé lui indiquant sa présence sur le réseau classique, ladite étape étant réalisée respectivement par le moyen de codage et le moyen d'émission du moteur interne,
- une étape d'attente (101) de la réception d'une information.
   Dès que le terminal mobile est présent sur le réseau de l'opérateur, le moteur interne du module passe une étape de réception (304) du deuxième message codé, effectuée par le moyen de réception du moteur interne, et
- une étape d'envoi (305) dudit deuxième message codé vers le module serveur (2), effectuée par le moyen d'émission du moteur interne. Puis, le moteur interne du module serveur (2) effectue les étapes suivantes :

- une étape de réception et de décodage (204) du deuxième message codé, effectuée par le moyen de réception et le moyen de décodage du moteur interne,
- une étape de création du chaînage et d'envoi (205) au module passerelle (3) de l'information codée destinée au module client (1) du terminal mobile, ladite étape étant effectuée respectivement par le moyen de codage et le moyen d'émission du moteur interne.

Le module passerelle (3) réalise :
- une étape de réception (306) de l'information codée, effectué par le moyen de réception du moteur interne,
- une étape de transfert de l'information (307) à l'opérateur téléphonique et d'envoi de l'information au module client (1) du terminal mobile, ladite étape étant effectuée par le moyen d'émission du moteur interne.

Le moteur interne du module client (1) réalise les étapes suivantes :
- une étape de réception et de décodage de l'information (102) par le moyen de réception et le moyen de décodage du moteur interne,
- une étape de diffusion (103) de ladite information, contrôlée par un des moteurs secondaires, à l'utilisateur du terminal mobile sous forme d'image, de son ou de texte.

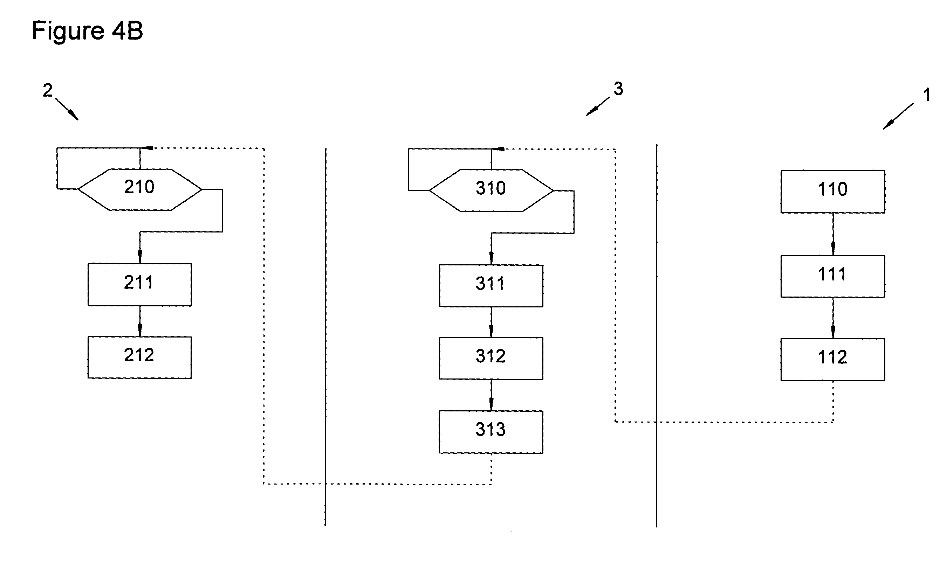

La figure 4B représente le schéma fonctionnel d'une communication dont l'information est envoyée par un terminal mobile vers un serveur de communication via un réseau de télécommunication classique. Ce schéma comporte plusieurs étapes réalisées par le moteur interne des différents modules du système de communication. Le moteur interne du module client (1) du terminal mobile réalise les étapes suivantes :
- une étape de réception (110), par un moyen de réception dudit moteur interne, d'une information émise par un utilisateur du terminal mobile via, par exemple, un clavier, un écran tactile ou un traitement du son, ladite information étant destinée à un autre terminal mobile,
- une étape de codage (111) de ladite information en langage Frene, réalisée par le moyen de codage dudit moteur interne,
- une étape de création d'un chaînage et d'envoi (112) de l'information codée, effectuée respectivement par le moyen de création de chaînage et le moyen d'émission dudit moteur interne, l'information codée étant envoyée vers le module passerelle (3) intégré sur le terminal d'un opérateur de téléphonie ou à son fournisseur d'accès avec lequel l'utilisateur a un contrat de communication.

Le moteur interne du module passerelle (3) est en état d'attente (310), lorsque l'information codée arrive. Le moyen de réception du moteur interne du module passerelle (3) effectue alors les étapes suivantes :
- une étape de réception de l'information codée (311) par le moyen de réception du moteur interne,
- une étape d'envoi de l'information codée (313) par le moyen d'émission du moteur interne.

Puis le moteur interne du module serveur (2) effectue les étapes suivantes :
- une étape de réception (211) de l'information codée par le moyen de réception,
- une étape de stockage (212) de ladite information codée par le moyen de mémorisation. Cette information sera, ensuite, soit transmise vers un autre terminal mobile, soit traitée s'il s'agit par exemple d'un achat ou d'un vote électronique à distance.

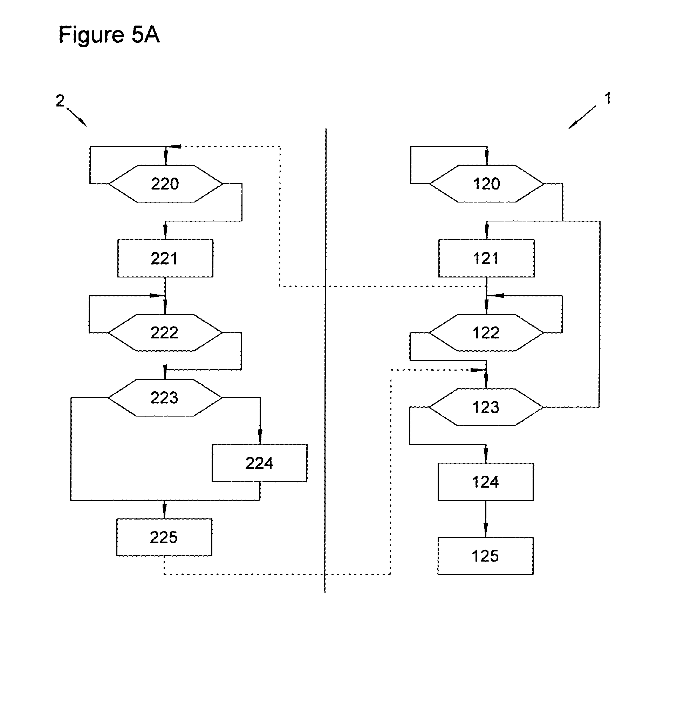

La figure 5A représente le schéma fonctionnel d'une communication dont l'information est envoyée par un serveur de communication vers un terminal mobile via un réseau à ondes courtes de type WIFI et/ou Bluetooth. Le moteur interne du module client (1) du terminal mobile effectue les premières étapes suivantes :
- une étape de détection (180) via son moyen de détection automatique, de la présence du terminal mobile dans une zone à ondes courtes, par exemple WIFI,
- une étape d'envoi d'un message codé (121) au module serveur (2) du serveur de communication, disposé dans la même zone WIFI, ledit message codé (121) indiquant au module serveur (2) que le terminal mobile est présent dans la zone WIFI,
- une étape d'attente (122) durant laquelle un moyen de comptage dudit moteur interne compte le temps écoulé entre l'envoi dudit message codé et un temps mémorisé prédéfini, si le temps est révolu et qu'aucune réponse provenant du module serveur (2) n'a été émise, le moteur interne du module client (1) relance l'étape précédente (121) d'envoi d'un message codé.

Le moteur interne du module serveur (2) réalise les étapes suivantes :
- une étape de réception et de décodage du message codé (220), effectuée respectivement par le moyen de réception et le moyen de décodage du moteur interne,
- une étape de détection (222) d'une information codée, mémorisée dans le moyen de mémorisation du module serveur (2), à transmettre au terminal mobile ou de prise en compte de l'arrivée d'une information à coder et à envoyer vers le terminal mobile,
- une étape de codage (223) en langage Frene d'une information, si une information arrive d'un réseau extérieur, par le moyen de codage dudit moteur interne,
- une étape de création d'un chaînage et d'envoi de ladite information codée (224) vers le module client (1) du terminal mobile via le réseau à ondes courtes, ladite étape étant effectuée respectivement par le moyen de création d'un chaînage et le moyen d'émission du moteur interne.

Puis le moteur interne du module client (1) réalise les étapes suivantes :
- une étape de réception et de décodage (123) de l'information codée, par le moyen de réception et le moyen de décodage dudit moteur interne,
- une étape de diffusion (124) de l'information contrôlée par un des moteurs secondaires dudit moteur interne.

La figure 5B représente le schéma fonctionnel dont l'information est envoyée par un terminal mobile vers un serveur de communication via un réseau à ondes courtes de type WIFI, lors de l'envoi d'une information d'un terminal mobile émetteur ou appelant à un terminal mobile destinataire. Un premier utilisateur d'un premier terminal mobile envoie un premier message destiné à un second utilisateur d'un second terminal mobile via le système de communication de la présente invention, en étape (130). Le moteur interne du module client (1) du premier terminal mobile émetteur réalise les étapes suivantes :
- une étape de codage du premier message du premier utilisateur par un moyen de codage et de stockage dudit message dans le moyen de mémorisation du terminal mobile (131),
- une étape de création d'un chaînage et d'envoi (132) d'un second message codé vers le module serveur (2), réalisé de manière simultanée à l'étape précédente (131), respectivement par le moyen de chaînage et le moyen d'émission dudit moteur interne, afin de s'informer de la présence ou non du second terminal mobile sur le réseau à ondes courtes,
- une étape (133) de mise en attente de la réponse du module serveur (2).

Le moteur interne du module serveur (2) est en état d'attente (230), lorsque le second message codé arrive. Le moteur interne du module serveur (2) réalise, ensuite, les étapes suivantes :
- une étape (231) de réception du second message codé par un moyen de réception et de décodage dudit message par un moyen de décodage du moteur interne - le module serveur (2) sait si le second terminal mobile est présent dans la zone WIFI, quand ce dernier lui envoie automatiquement une information codée lui indiquant sa présence sur le réseau, comme expliqué précédemment -,
- une étape de prise de connaissance (232) de la présence ou non du second terminal mobile sur le réseau à ondes courtes, ladite information pouvant être mémorisée dans le moyen de mémorisation du module serveur (2),
- une étape d'envoi (233, 234 suivant la réponse attendue) d'un troisième message codé au module client (1) du premier terminal mobile,
- si le second terminal mobile n'est pas présent en zone WIFI, une étape d'attente (235) de la réception du premier message codé envoyé par le moteur interne du module client (1) du premier terminal.

Le moteur interne du module client (1) en état d'attente (233) réalise les étapes suivantes dès l'arrivée du troisième message codé :
- une étape de réception et de décodage (134) du troisième message codé par les moyens de réception et de décodage dudit moteur interne et de détection de la réponse apportée,
- si le second terminal mobile se trouve effectivement en zone WIFI, une étape de création d'un chaînage et d'envoi (135) directement du premier message codé au module client du second terminal mobile, par les moyens de création de chaînage et d'émission dudit moteur interne,
- si le second terminal mobile n'est pas présent en zone WIFI, une étape d'envoi (136) du premier message codé vers le module serveur (2), par le moyen d'émission.

Suite à l'étape (136), le moteur interne du module serveur (2) effectue une étape (236) de réception, réalisée par le moyen de réception, et une étape de stockage, réalisée par le moyen de mémorisation, du premier message. Ce premier message sera, ensuite, transféré au second terminal mobile destinataire, soit par le réseau de télécommunication classique comme expliqué précédemment, soit par le réseau WIFI, lorsque le second terminal mobile indiquera sa présence dans une zone WIFI au module serveur (2).

Dans le mode de réalisation de la figure 6, un terminal (A) présent sur le réseau (5) effectue lors d'une phase préalable un signalement au serveur. Plus précisément, lorsque la procédure d'initialisation du moteur logiciel du module client (1) est lancé sur le terminal mobile (A), ce dernier envoie un chaînage d'information vers le serveur, qui prend en compte le fait que ce terminal (A) est présent. Par réponse, il envoie en simultané une information sur la présence de ce terminal (A) à destination de tous les terminaux mobiles qui ont référencé ce même terminal (A) comme contact. En outre, la détection de la présence (232) sur le réseau (5) des autres terminaux ayant aussi été effectuée par le module serveur (2) et les terminaux étant donc listés par ce dernier, le serveur envoie au terminal mobile (A) qui vient d'être lancé une information indiquant l'ensemble des mobiles présents sur le réseau (5) avec lesquels le serveur est en contact.

Ensuite, lorsque le terminal mobile (A) doit envoyer un message vers un autre terminal mobile (B), la demande correspondante est envoyée par le premier terminal (A) vers le serveur qui établit un cheminement de type roadmap pour atteindre le second terminal (B). Le module serveur (2) est par exemple agencé pour déterminer le point WIFI le plus proche, puis établir la présence des terminaux mobiles équipés avec le module client (1). Autrement dit, le module serveur (2) permet de transférer le message vers un des terminaux mobiles présents qui lui-même transfère à son tour le message vers un autre terminal mobile, et ceci autant de fois que nécessaire pour atteindre le terminal destinataire (B). Si le premier terminal (A) et le second terminal (B) sont dans une zone assez proche, la passerelle vers le serveur est mise en attente ou "stand-by" de façon à ce que le transfert soit réalisé directement par des relais terminaux mobiles.

Un processus de communication par ondes-courtes entre terminaux peut ainsi être déclenché pour assurer le transfert de l'information. Ce processus peut être déclenché grâce au moteur logiciel installé dans chacun des modules client (1) des terminaux mobiles et qui se sert des fréquences non utilisées pour envoyer des messages réguliers de requêtes ou « pings ». Ces messages réguliers à destination de relais sont récupérés par les autres terminaux mobiles ou par une borne à ondes courtes, la localisation étant supervisée depuis le serveur.

En référence à la figure 6, après l'étape d'envoi (234) au module client (1) du premier terminal mobile (A) dudit troisième message codé (contenant des informations sur la présence des autres terminaux mobiles), le premier terminal mobile (A) exécute une étape (135) consistant à créer un chaînage et envoyer ledit premier message codé directement au module client d'un second terminal mobile. Un sous-réseau autonome peut alors être créé. Le chaînage créé par le premier terminal (A) comprend le numéro du destinataire final. Chaque terminal recevant le message réalise par l'intermédiaire du module client (1) une vérification que le numéro requis correspond à son numéro et, par la négative, va rechercher le cheminement de type roadmap inclus dans le message. En cas de problème de transfert au relais suivant, le terminal concerné émet une requête au serveur pour demander un nouveau chemin. Le serveur s'exécute en fournissant un autre cheminement, par exemple obtenu après une mise à jour de la détection de présence des terminaux dans le réseau (5). Il doit être compris que des relais sont requis dans les cas où la distance de propagation des ondes courtes entre le terminal (A) envoyeur de l'information et le terminal (B) destinataire final est trop grande, ou si ledit terminal (B) destinataire est trop loin d'une borne à ondes courtes. C'est le serveur qui détermine si le transfert s'effectue par des échanges directs ou par relais lors du message qu'il établit avec le cheminement de type roadmap qu'il gère en direct.

Le réseau de communication utilisé dans l'invention peut être maillé et permettre ainsi de passer les chaînages par différentes branches du sous-réseau en simultané. Comme illustré à la figure 6, un ou plusieurs terminaux mobiles peuvent servir de relais pour le transfert par ondes courtes du premier message codé à destination du second terminal mobile (B). Le sous-réseau autonome ainsi formé est une copie conforme d'un réseau étoilé de type Internet, chaque terminal mobile et chaque équipement de communication du type borne à ondes courtes constituant chacun un noeud qui communique avec tous les terminaux dans sa zone d'émission. Les informations codées vont de noeud en noeud en prenant les liaisons libres, offrant une distribution rapide.

La figure 5C représente le schéma fonctionnel dont l'information est envoyée par un terminal mobile vers un serveur de communication via un réseau à ondes courtes de type WIFI, lors par exemple d'un achat à distance ou d'un vote. Un utilisateur d'un terminal mobile effectue une demande par exemple acceptation d'un achat ou réponse à un vote, par le biais d'un moyen d'émission tel qu'un clavier lors de l'étape (140). Le moteur interne du module client (1) réalise, ensuite, les étapes suivantes :
- une étape de codage (141) de l'information par un moyen de codage,
- une étape de création d'un chaînage et d'envoi (142) de l'information, par les moyens de création d'un chaînage et d'émission, directement via le réseau WIFI au module serveur (2) du serveur de communication.

Le moteur interne du module serveur (2) est en état d'attente (240), à l'arrivée de l'information codée. Le moteur interne réalise ensuite les étapes suivantes:
- une étape de réception (241) de l'information codée,
- une étape de stockage (242) de l'information codée dans un moyen de mémorisation. Le module serveur (2), suivant la demande effectuée ou l'option choisie, va traiter l'information.

Plusieurs fonctions de communication sont envisagées par le système de communication de la présente invention. Ces fonctions peuvent être par exemple : la réception de messages électroniques par un terminal mobile envoyés par un serveur de communication, le lancement d'une messagerie instantanée par un terminal mobile, l'envoi d'une offre commerciale par un serveur de communication, l'achat à distance via un terminal mobile, le vote à distance via un terminal mobile ou toute autre communication. Ces différentes fonctions de communication utilisent la transmission d'informations codées suivant le réseau de communication choisi, telle qu'elle est énoncée précédemment et représentée par les figures 4A, 4B, 5A, 5B, 5C.

Quelques unes de ces fonctions de communication sont décrites ci-après. Pour une meilleure compréhension des différentes fonctions il n'est pas fait mention des différents moyens techniques du moteur interne de chaque module du système de communication, lors de la description des fonctions de communication. Cependant ces différents moyens sont supposés admis, en se référant à la description ci-avant.

Une première fonction de communication est l'envoi d'un message électronique par un serveur de communication vers un terminal ordinateur ou vers un terminal mobile suivant le choix du destinataire du message. Le moyen de réception du moteur interne du module serveur (2) reçoit une information codée en langage Frene d'un autre serveur de communication, par exemple. Le moyen de décodage dudit moteur interne transforme l'information en langage compatible et le moyen d'émission dudit moteur interne transmet l'information transformée vers des serveurs Internet de type SMTP ou POP3. Ces serveurs peuvent par exemple appartenir aux fournisseurs d'accès détenant les comptes e-mails du destinataire de l'information codée, quand ledit destinataire veut relever le message à partir de son ordinateur personnel. Si le destinataire souhaite recevoir le message sur son terminal mobile, le module client (1) du terminal mobile en fait la demande auprès du module serveur (2) du serveur de communication. Le moyen de réception du moteur interne du module serveur rapatrie l'information du serveur de mails du fournisseur détenteur du compte e-mail. Le moyen de codage du moteur interne du module serveur recode l'information en langage Frene et le moyen d'émission dudit moteur interne renvoie l'information codée vers le module client (1) du terminal mobile destinataire du courrier électronique.

Une autre fonction de communication concerne le lancement de la messagerie instantanée par un utilisateur d'un terminal mobile. La messagerie instantanée utilisant le protocole IRC (Inter Relay Chat) ne sera active que si le moyen de détection de zone WIFI du terminal mobile détecte qu'il est dans une zone à ondes courtes. Les moyens de codage et d'émission du moteur interne du module client (1) du terminal mobile permettent de transmettre un message codé en langage Frene vers le module serveur (2) pour déclarer le module client (1) comme étant actif. Le moyen de réception et le moyen de décodage du moteur interne du module serveur (2), respectivement, reçoit l'information et la décode. Le moyen de codage et d'émission du moteur interne du module serveur transmettent une information codée en langage Frene vers le module client (1), indiquant les statuts, connectés ou non connectés, de toutes les personnes de la bibliothèque d'amis présents sur le réseau WI-FI.

Une autre fonction de communication est l'envoi par le serveur de communication des données concernant des offres commerciales au module client (1) d'un terminal mobile. Le module serveur (2) stocke toutes les offres commerciales dans son moyen de mémorisation. Quand le terminal mobile n'est pas sur une zone couverte, par exemple, par le réseau WI-FI et lorsqu'un utilisateur allume son terminal mobile, les moyens de codage et d'émission du moteur interne du module client (1) dudit terminal mobile permettent d'envoyer une requête codée en langage Frene au module passerelle (3) d'un opérateur téléphonique par exemple, lui signalant l'activation du module client (1). Les moyens techniques du moteur interne du module passerelle (3) permettent la réception de la requête du module client et l'envoi de ladite requête vers le module serveur (2). Le message d'activation peut comprendre le code IMSI et un chaînage de caractères du dernier package d'offres commerciales disponibles dans la mémoire du module client (1). Le moyen de traitement du moteur interne du module serveur (2) compare le chaînage de caractères du dernier package avec celui qui est présent dans la mémoire du serveur de communication. Si les 2 codes sont identiques par comparaison, le moteur interne du module serveur (2) n'envoie rien. Si les 2 codes sont différents par comparaison, les moyens de codage et d'émission du moteur interne du module serveur (2) renvoie en langage Frene le dernier package d'offres commerciales en date via le module passerelle (3) de l'opérateur qui va l'acheminer au module client (1) du terminal mobile destinataire. Si l'utilisateur est en zone ondes courtes WI-FI, l'échange d'informations se fait directement entre le module client (1) et le module serveur (2).

Une autre fonction de communication concerne les micro-paiements d'achats ou de services via la facture téléphonique de l'opérateur avec lequel l'utilisateur du terminal mobile a un contrat de communication. Par défaut, le moyen de traitement du moteur interne du module client (1) du terminal mobile sait que la fonction paiement ne fonctionne pas sur le réseau ondes courtes WI-FI. Une première étape de cette fonction consiste en l'envoi par le moyen de codage et le moyen d'émission du moteur interne du module client (1), par exemple pour l'achat d'une offre commerciale, d'une information autorisant l'achat, via la commande « j'achète » codée en langage Frene. Le moyen de traitement du moteur interne du module passerelle (3) dialogue avec le système informatique de l'opérateur pour l'informer que l'utilisateur veut payer une somme correspondant au montant validé lors de son achat et veut rajouter cette somme à sa facture téléphonique. Ainsi, c'est l'opérateur téléphonique qui paie directement l'achat à un commerçant, la somme étant ensuite ajoutée à la facture téléphonique. Le système informatique de l'opérateur autorise ou n'autorise pas l'opération, par exemple lorsque l'utilisateur du terminal mobile est débiteur. Le système informatique envoie sa réponse au module passerelle (3). Ce dernier transmet par les moyens de codage et d'émission de son moteur interne, au module client (1), la validité de l'information codée en Frene. Si l'autorisation est accordée, le module client (1) envoie, par les moyens de codage et d'émission de son moteur interne, l'ensemble des informations en langage Frene relatives à l'achat au module passerelle (3). Ces informations peuvent être, par exemple, le code de l'offre commerciale, une adresse de livraison différente de son adresse de facturation déclarée à l'opérateur. Le module passerelle (3) envoie, par les moyens de codage et d'émission de son moteur interne, l'information codée en langage Frene au module serveur (2) qui traite l'information avec le commerçant, par le moyen de traitement de son moteur interne.

La fonction paiement des achats peut également se faire à partir d'un terminal bancaire, tel qu'un guichet automatique d'une banque via le réseau classique ou le réseau à ondes courtes. L'utilisateur choisit par exemple une offre commerciale sur son terminal mobile via le module client (1) et sélectionne le mode de paiement via un guichet bancaire. Le moyen de codage du moteur interne du module client (1) code en langage Frene une information complète comprenant, par exemple, le code de l'offre commerciale, une adresse de livraison différente ou d'autres informations. Lorsque la transmission des informations se fait via un réseau téléphonique, le moyen d'émission du moteur interne du module client (1) envoie les informations codées au module passerelle (3). Le moyen d'émission du moteur interne du module passerelle envoie lesdites informations au module serveur (2). Si l'utilisateur est en zone ondes courtes WI-FI, l'échange se fait directement entre le module client (1) et le module serveur (2). Le moteur interne de ce dernier module les stocke dans un moyen de mémorisation en attendant le paiement. Le client se présente ensuite à un guichet bancaire automatique afin de payer son achat. Après identification du mode de paiement demandé, le guichet bancaire propose au client un écran de saisie spécifique au paiement pour que le client entre son numéro de terminal mobile, par exemple le numéro IMSI. Une fois le numéro de mobile validé, le système informatique de la banque interroge le module serveur (2) pour connaître le montant de la transaction. Le moyen d'émission du moteur interne du module serveur (2) envoie dans le langage spécifique au système informatique de la banque, le montant exact à débiter. Le système informatique de la banque gère la demande et donne son autorisation ou non en renvoyant le ticket de paiement au module serveur (2). Le ticket de paiement ainsi que toutes informations relatives au traitement de la commande sont renvoyés par le moyen d'émission du moteur interne du module serveur (2) au commerçant. Afin de confirmer le paiement au client, le moyen d'émission du moteur interne du module serveur (2) lui envoie un SMS, via un serveur SMS externe, lui indiquant que sa commande a été validée et traitée. Le moyen d'émission du moteur interne du module serveur (2) envoie un second SMS indiquant au client le numéro de bordereau et le transporteur choisi, pour qu'il puisse suivre en ligne les étapes de livraison de son achat sur les sites des sociétés de transport qui proposent le service.

Une autre fonction de paiement est le paiement par téléphone. Lorsque l'utilisateur d'un terminal mobile a choisi une offre commerciale et le mode de paiement, les moyens de codage et d'émission du moteur interne du module client (1) du terminal mobile envoient l'information codée en langage Frene au module passerelle (3) implanté chez un opérateur téléphonique. Le moyen d'émission du moteur interne du module passerelle (3) envoie l'information codée au module serveur (2). Si l'utilisateur a accès au réseau WI-FI, les moyens de codage et d'émission du moteur interne du module client (1) envoient directement l'information en langage codé au module serveur (2). Ce dernier stocke l'information dans son moyen de mémorisation. L'utilisateur, via le module client (1), choisit la fonction de paiement par téléphone. Il renseigne le serveur téléphonique en lui donnant un code, par exemple à 4 chiffres, via le clavier de son téléphone. Le serveur téléphonique envoie ledit code au module serveur (2) qui vérifie par le moyen de traitement de son moteur interne que le code correspond à un numéro d'authentification du terminal mobile par exemple son numéro IMSI. Si la comparaison n'est pas bonne, l'opération est rejetée et les moyens de codage et d'émission du moteur interne du module serveur (2) envoient une information au serveur téléphonique qui délivre un message audio de refus de transaction. Si la comparaison est bonne, le moyen de traitement du moteur interne du module serveur (2) déclenche l'interrogation bancaire pour obtenir l'autorisation. Le système informatique de l'opérateur bancaire donne ou non son autorisation. Pour confirmer au client que la banque autorise la transaction, le moyen d'émission du moteur interne du module serveur (2) envoie au serveur téléphonique la confirmation de la validation de la commande. Le serveur téléphonique délivre un message audio au client de type « votre commande a été autorisée... ». Simultanément, le moyen d'émission du moteur interne du module serveur (2) envoie le ticket de paiement ainsi que toute information relative au traitement de la commande au commerçant. Le moyen d'émission du moteur interne du module serveur (2) envoie également un SMS de confirmation de commande au client final lui indiquant que sa commande a été validée et traitée. Le moyen d'émission du moteur interne du module serveur (2) envoie un second SMS indiquant au client le numéro de bordereau et le transporteur choisi, pour qu'il puisse suivre en ligne les étapes de livraison de son achat sur les sites des sociétés de transport qui proposent le service.

Une autre fonction de communication préférée de l'invention est le vote électronique via le terminal mobile. Les moyens de codage et d'émission du moteur interne du module serveur (2), respectivement, codent en langage Frene et envoient une information, concernant un questionnaire à voter, au module passerelle (3) ou directement au module client (1) suivant le réseau de communication présent. Via le réseau classique, le moyen d'émission du moteur interne du module passerelle (3) envoie l'information codée au module client (1). L'utilisateur du terminal mobile répond à la ou aux questions posée(s) par le biais de son terminal. Une fois le vote validé, le moyen de codage du moteur interne du module client (1) code le vote en langage Frene et le moyen d'émission dudit moteur interne envoie les informations au module passerelle (3), qui transmet les informations codées au module serveur (2). Une fois les informations reçues, le moyen de traitement du moteur interne du module serveur (2) les stocke et bloque le numéro d'authentification de l'utilisateur venant de voter pour que celui-ci ne vote qu'une seule fois. En simultané, le moyen de traitement du moteur interne du module client (1) supprime le vote de sa mémoire. Le moyen de traitement du moteur interne du module serveur (2) redistribue les informations au système informatique du demandeur, dans le langage informatique du système demandeur du vote. Si l'utilisateur est en zone ondes courtes WI-FI, l'échange se fait directement entre le module client (1) et le module serveur (2).

Une autre fonction de communication préférée de l'invention est le téléchargement d'offres de service préprogrammées, telles que des logiciels, des jeux, des fichiers son, vidéo, image et autres. Le moyen de traitement du moteur interne du module client (1) du terminal mobile sélectionne des offres de service à télécharger et les moyens de codage et d'émission de son moteur interne envoie un message en langage Frene demandant au module passerelle (3) de rapatrier les offres de services téléchargées. Le module passerelle (3) relaie la demande au module serveur (2) en langage codé Frene. Le moteur interne du module serveur transmet les offres de service demandées au moteur interne du module passerelle (3). Ce dernier envoie les informations au moteur interne du module client (1) en langage codé. Si l'utilisateur est en zone ondes courtes WI-FI, l'échange se fait directement entre le module client (1) et le module serveur (2).

Dans la suite de la description, est présentée de manière plus détaillée une des fonctions de communication du système de la présente invention permettant ainsi une meilleure compréhension des différentes étapes de transmission d'informations entre un serveur de communication et un terminal mobile. Dans le mode de fonctionnement de la messagerie instantanée, l'ensemble des dialogues entre le module client (1) d'un terminal de communication et le module serveur (2) d'un serveur de communication s'effectue via un réseau à ondes courtes de type WIFI ou bluetooth, et se fait en langage Frene. Un utilisateur d'un terminal mobile situé en zone WIFI, par exemple, déclenche la messagerie instantanée sur le module client (1) du terminal mobile pour communiquer avec d'autres utilisateurs de la messagerie instantanée. La mémoire de la puce et/ou une unité de stockage du terminal mobile émetteur comprend une liste comportant les différents numéros d'authentification des utilisateurs appartenant à la messagerie instantanée du terminal mobile appelant. A chaque numéro d'authentification correspond une position spécifique dans la liste. Ces numéros d'authentifications peuvent correspondre, par exemple, au numéro IMSI (International Mobile Subscriver Identity) représentant un numéro constructeur du mobile. Le moyen de codage du moteur interne du module client (1) du terminal mobile crée une phrase codée segmentée en langage Frene, telle que présentée en figure 2A, à envoyer au module serveur (2) du serveur de communication. La phrase codée comprend un premier segment (S1) comportant le numéro d'authentification du terminal mobile appelant, en l'occurrence le terminal sur lequel est lancée la messagerie instantanée. Le second segment (S2) représente une commande codée en langage Frene devant être exécutée par le moyen de traitement du moteur interne du module serveur (2). Les segments suivants comprennent pour chaque utilisateur appartenant à la bibliothèque d'amis, un code position sur la liste du terminal mobile d'un utilisateur à appeler (S3), suivi du numéro d'authentification de cet utilisateur (S4). Le second segment (S2) du chaînage comprend la commande codée sur quatre caractères indiquant ainsi au moyen d'un éclatement de chaînage du moteur interne du module serveur (2) d'éclater la liste, de subdiviser les segments pour aller chercher les numéros identifiant des utilisateurs (S4) de messagerie instantanée présents sur sa liste. Une fois le chaînage créé, le moyen d'émission du moteur interne du module client (1) l'envoie au module serveur (2), via le réseau WIFI par exemple. Le moyen de réception du moteur interne du module serveur reçoit le message, le moyen de décodage de son moteur interne éclate le message et analyse en premier le second segment (S2) représentant la commande. Le moyen de traitement du moteur interne du module serveur (2) récupère et stocke, ensuite, dans son moyen de mémorisation, le numéro du terminal mobile appelant (S1), il casse, ensuite, chaque segment (S3-S4) suivant la subdivision définie par la commande du second segment (S2). Le moyen de traitement du moteur interne du module serveur (2) prend ensuite chaque segment (S3, S4) et les analyse les uns après les autres pour savoir si l'utilisateur correspondant au numéro d'authentification (S4) est présent sur le réseau WIFI. A la fin de l'analyse, le moyen de traitement du moteur interne du module serveur (2) compile une nouvelle liste contenant uniquement les codes position correspondant à la liste du terminal mobile des utilisateurs à appeler présents sur le réseau WIFI. Le moyen de codage du moteur interne du module serveur (2) crée un nouveau chaînage, tel que représenté en figure 2B, comprenant comme premier segment la commande codée (S1') demandant au module client (1) du terminal mobile appelant de diffuser la liste présente dans les segments suivants (S2', S3', S4'). Ayant conservé le numéro d'authentification du terminal mobile appelant (S1), le moyen d'émission du moteur interne du module serveur (2) lui envoie sa nouvelle liste recompilée. Le moyen de traitement du moteur interne du module client (1) du terminal mobile appelant visualise la liste et la compare à la sienne afin d'identifier les utilisateurs présents sur le réseau WIFI. En parallèle, le moyen de traitement du moteur interne du module serveur (2) conserve en mémoire le chaînage original envoyé par le module client (1), lui permettant ainsi de détecter et de comparer en permanence les utilisateurs à appeler présents sur le réseau à ondes courtes et de renvoyer via le moyen d'émission un chaînage recompté chaque fois qu'il y a une modification sur la liste. Dès que l'utilisateur arrête l'utilisation de la messagerie instantanée, le module client (1) du terminal mobile concerné en informe le module serveur (2). Le moyen de traitement du moteur interne de ce dernier efface le chaînage original. Ces différentes étapes ont lieu lors de toute communication entre les différents modules du système, telle que le téléchargement de données, le paiement d'achat, le vote à distance et autre.

Un des avantages de l'invention est de permettre la création d'un sous-réseau assurant la transmission des informations tout en s'affranchissant des opérateurs ou autres sources extérieures. En outre, un gain de temps est obtenu pour le transport des informations par rapport aux modes classiques de télécommunication.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Système de communication permettant le transfert via un réseau de communication (4, 5) d'au moins une information codée (80) entre un terminal mobile et un serveur de communication, ledit système comprenant au moins un module client (1) intégré dans le terminal mobile permettant de diffuser l'information codée (80) à un utilisateur dudit terminal mobile, un module serveur (2) intégré dans le serveur de communication permettant de récupérer une information non codée provenant d'au moins un réseau extérieur existant (7a, 7b, 7c), et au moins un réseau de communication (4, 5) distinct dudit réseau extérieur (7a, 7b, 7c) permettant le transfert de l'information codée (80) entre le module client (1) du terminal mobile et le module serveur (2) du serveur de communication, ledit système de communication étant **caractérisé en ce qu'**il comporte :
- des moyens de codage respectifs prévus dans ledit module client (1) et dans le module serveur (2), pour coder une information provenant d'un réseau extérieur (7a, 7b, 7c) ;
- des moyens d'émission et de réception respectifs prévus dans le terminal mobile et dans le module serveur (2), agencés pour effectuer la transmission de l'information codée (80) sous la forme d'un message chaîné (80) comprenant un ou plusieurs segments (S1, S2, S3, S4, S1', S2', S3', S4'), au moins un des segments (S2, S1') correspondant à une commande codée sur quatre caractères, le message comprenant des variables récurrentes (S1) et pouvant également comprendre des segments correspondant à des variables nécessaires à l'exécution de la commande (S3, S4, S2', S3', S4'), lesdites variables récurrente étant placées en tête du chaînage et pouvant être un numéro d'authentification du terminal mobile, les segments étant terminés par un caractère distinctif indiquant la fin du segment dans le chaînage ;
lesdits moyens d'émission et de réception du terminal mobile étant en outre agencés pour permettre une communication entre deux terminaux mobiles incluant l'émission depuis le module client (1) d'un premier terminal mobile d'une information codée à destination du module client d'un second terminal mobile.

2. Système de communication, selon la revendication 1, **caractérisé en ce que** la transmission d'un message chaîné peut s'effectuer via deux réseaux distincts, soit un réseau de communication à ondes courtes (5), tel que le réseau WI-FI, quand le terminal mobile et le serveur de communication sont situés dans une même zone de communication à ondes courtes, soit, dans le cas contraire, un réseau classique (4) tel que le réseau radio-téléphonique mobile.

3. Système de communication, selon la revendication 1 ou 2, **caractérisé en ce que** le module client (1) intégré dans le terminal mobile comprend un moyen de détection automatique permettant de savoir si le terminal mobile se trouve dans un réseau de communication à ondes courtes (5).

4. Système de communication, selon une des revendications 1 à 3, **caractérisé en ce qu'**il comprend un module passerelle (3) intégré dans un terminal appartenant par exemple à un opérateur d'un réseau classique (4), ledit module passerelle (3) permettant le transfert de l'information codée entre le module serveur (2) du serveur de communication et le module client (1) du terminal mobile via le réseau classique (4).

5. Système de communication, selon la revendication 4, **caractérisé en ce que** le module client (1), le module serveur (2) et le module passerelle (3) comprennent un moteur interne (8) capable soit de transformer les commandes codées reçues par l'un ou l'autre des modules en action, soit de créer un message chaîné codé en langage propriétaire à envoyer vers un autre module du système de communication, ledit moteur interne (8) comprenant un moteur principal maître (81) permettant d'assurer le trafic des informations à traiter et un ou plusieurs moteurs secondaires esclaves (83, 84, 8n) permettant d'exécuter les actions à réaliser, lesdits modules (1, 2, 3) comprenant également une bibliothèque interne (82) aux modules comportant un ensemble de processus permettant l'exécution des actions liées aux commandes demandées.

6. Système de communication, selon la revendication 5, **caractérisé en ce que** le moteur principal (81) du moteur interne (8) comprend un moyen de réception d'une information, un moyen de décodage d'une information, un moyen de traitement du message, un moyen de codage d'une information et un moyen d'émission d'une information, le moyen de décodage comprenant un moyen de détection d'une subdivision de segments dans un chaînage et un moyen d'éclatement du chaînage en segments, le moyen de codage comprenant un moyen de création d'un message chaîné.

7. Système de communication, selon la revendication 5 ou 6, **caractérisé en ce que** les actions exécutées par les moteurs secondaires du moteur interne peuvent être l'affichage d'une image ou l'émission d'un son.

8. Système de communication, selon une des revendications 5 à 7, **caractérisé en ce que** le codage des commandes s'effectue à l'aide d'un langage propriétaire de fonctionnalités, une commande pouvant être composée de quatre caractères, chaque commande étant unique et ne pouvant se combiner avec une autre commande.

9. Système de communication, selon une des revendications 5 à 8, **caractérisé en ce que** le moteur interne (8) du module client (1), du module serveur (2) et du module passerelle (3) s'exécute sur un système d'exploitation de base architecturale UNIX™ tel que le Symbian®.

10. Procédé de transmission d'information réalisé par un moteur interne (8) des modules (1, 2, 3) du système de communication selon les revendications 1 à 8, **caractérisé en ce que** lors de la réception d'un message chaîné (80) par un des modules (1, 2, 3), le procédé comprend les étapes suivantes :
- une étape de réception d'une information (800) sous forme d'un message chaîné (80), par le moyen de réception du moteur principal,
- une étape de détection des segments compris dans le chaînage et d'éclatement de ce message chaîné en plusieurs segments (801), ladite étape étant réalisée par le moyen de décodage du moteur principal,
- une étape de repérage du segment correspondant aux commandes à exécuter (802), par le moyen de décodage du moteur principal,
- une étape de recherche par le moyen de traitement du moteur principal d'un processus correspondant à une commande (803), ledit processus étant disposé dans la bibliothèque interne (82) des modules (1, 2, 3),
- une étape de lancement par le processus requis (804) d'actions auprès du ou des moteurs secondaires (83, 84, 8n),
et **en ce que** lors de l'envoi d'un message chaîné le procédé comprend les étapes suivantes :
- une étape de réception de l'information stockée dans un moyen de mémorisation ou émise par un utilisateur via un moyen d'émission (810), ladite étape étant réalisée par le moyen de réception du moteur principal,
- une étape de codage de la commande correspondant à l'exécution de ladite information (811), par le moyen de codage du moteur principal,
- une étape de création d'un message chaîné comprenant au moins la commande codée et l'information à envoyer (812), par le moyen de codage du moteur principal ;
- une étape d'émission du message chaîné vers un autre module du système de communication (813), par le moyen d'émission du moteur principal.

11. Procédé de transmission d'information réalisé par le moteur interne selon la revendication 10, **caractérisé en ce qu'**à un envoi d'une action par le moteur principal vers au moins un moteur secondaire, le moteur principal attend une réponse du moteur secondaire, avant d'envoyer une autre action.

12. Procédé de communication entre le terminal mobile et le serveur de communication selon le système de communication de la revendication 1, **caractérisé en ce que** la transmission d'une information du serveur de communication vers le terminal mobile comprend les étapes suivantes :
- une étape de réception (200-223) et de codage (201, 224) par le module serveur (2) du serveur de communication, d'une information provenant d'un réseau extérieur (7b, 7c),
- une étape de vérification de la présence du terminal mobile sur le réseau du système de communication (204, 121),
- une étape d'émission de l'information codée via le réseau du système de communication vers le module client (1) d'un terminal mobile (205, 225),
- une étape de réception et de décodage (102, 123),
- une étape de diffusion (103, 124) de l'information par le module client (1) du terminal mobile, et **en ce que** la transmission d'une information du terminal mobile vers le serveur de communication comprend les étapes suivantes :
- une étape de codage par le module client (1) du terminal mobile d'une information émise par un utilisateur, via un moyen d'émission appartenant audit terminal mobile, à destination du module client d'un second terminal mobile ou à destination du module serveur (2) serveur de communication,
- une étape de transmission de l'information codée via le réseau du système de communication vers le module serveur (2) du serveur de communication (112, 142, 136), ou vers le module client du second terminal mobile (135),
- une étape de réception (211, 235, 241) et de stockage (212, 236, 242), dans un moyen de mémorisation du serveur de communication, de l'information codée ou de décodage et de diffusion de l'information par le module client du second terminal mobile.

13. Procédé de communication entre le terminal mobile et le serveur de communication selon la revendication 12, via un réseau de communication à ondes courtes, **caractérisé en ce que** l'étape de vérification de la présence du terminal mobile sur ledit réseau comprend une étape d'envoi d'un message codé (121) par le module client (1) du terminal mobile vers le module serveur (2) du serveur de communication indiquant au module serveur la présence du terminal mobile sur le réseau de communication à onde courte, si le module serveur (2) ne répond pas avant la fin d'une étape d'attente (122) définie suivant l'écoulement d'un temps prédéfini, le module client (1) réitère l'étape d'envoi du message codé (121).

14. Procédé de communication entre le terminal mobile et le serveur de communication selon la revendication 12, via un réseau de communication à ondes courtes, **caractérisé en ce que** l'étape de transmission d'une information codée du module client d'un premier terminal mobile émetteur de ladite information vers le module client d'un second terminal mobile destinataire de ladite information comprend les sous étapes suivantes :
- envoi (131) par le module client (1) du premier terminal mobile vers le module serveur (2) du serveur de communication d'un premier message codé demandant au module serveur (2) si le second terminal mobile destinataire de l'information codée est présent sur le réseau de communication à ondes courtes (5),
- réception et décodage (231) par le module serveur du premier message codé et envoi (233, 234) d'un second message codé par le module serveur (2) vers le module client (1) du premier terminal mobile, lui indiquant une réponse,
- envoi (135) de l'information codée par le module client (1) du premier terminal directement vers le module client du second terminal mobile, si ledit second terminal mobile est présent sur le réseau de communication à ondes courtes,
- envoi (136) de l'information codée par le module client (1) du premier terminal vers le module serveur (2) du serveur de communication et stockage (236) de l'information codée par ledit module serveur (2), si le second terminal mobile n'est pas présent sur le réseau de communication à ondes courtes (5).

15. Procédé de communication entre le terminal mobile et le serveur de communication selon la revendication 12, via un réseau de communication classique (4), **caractérisé en ce que** l'étape de transmission d'une information codée entre le module serveur (2) du serveur de communication et le module client (1) du terminal mobile s'effectuent via le module passerelle (3) intégré et comprend les sous-étapes suivantes :
- envoi (203) par le module serveur (2) vers le module passerelle (3) d'un premier message codé demandant la création d'une liaison vers le module client (1),
- réception et décodage (301) du premier message codé par le module passerelle, envoi d'un second message (302) par le module passerelle vers le terminal, par exemple de l'opérateur du réseau de communication classique, pour créer la liaison entre le module passerelle et le module client (1) et attente (303) par le module passerelle (3) de la présence du terminal mobile sur le réseau de communication classique,
- envoi (100) par le module client (1) vers le module passerelle (3) d'un troisième message codé indiquant la présence du terminal mobile sur le réseau de communication classique, réception (303) par le module passerelle (3) du troisième message codé,
- envoi (304) par le module passerelle (3) au module serveur (2) du troisième message codé indiquant la présence du terminal mobile sur le réseau de communication classique, réception et décodage (204) par le module serveur du quatrième message codé,
- envoi (205) par le module serveur (2) au module passerelle (3) de l'information codée stockée dans le moyen de mémorisation du serveur de communication,
- réception (305) et envoi (306) par le module passerelle (3) vers le module client (1) via le réseau de communication classique (4) de l'information codée.
